# EUROPEAN PATENT APPLICATION

(11) **EP 4 711 224 A1**
(43) Date of publication of application: **18.03.2026**
(21) Application number: 24199910.1
(22) Date of filing: 12.09.2024
(51) Int. Cl.: B60W 40/08, B60W 50/00, B60W 50/14, B60W 50/16, B60W 60/00

(54) **VEHICLE, APPARATUS, DATA CARRIER, COMPUTER PROGRAM, NEURAL NETWORK, AND METHODS FOR A HUMAN-MACHINE-INTERFACE**

(71) Applicant: AUMOVIO Germany GmbH, 60488 Frankfurt am Main (DE)
(72) Inventor: Hota, Rudra Narayan, 30175 Hannover (DE); Hellert, Dr. Christian, 30175 Hannover (DE); Robakowski, Miroslaw, 30175 Hannover (DE); Bosl, Markus, 30175 Hannover (DE); Weiss, Sebastian, 30175 Hannover (DE)
(74) Representative: Aumovio Corporation

(57) **Abstract**

Embodiments of the present disclosure relate to a vehicle, an apparatus, a data carrier, a computer program, a neural network, and methods for a human-machine-interface. One method comprises obtaining an appropriate attentiveness of an occupant/passenger of the vehicle for a future traffic situation. Further, the method comprises obtaining information on a predicted future attentiveness of an occupant/passenger of the vehicle for a future traffic situation and determining a cue to be provided to the occupant/passenger to obtain the appropriate attentiveness.

## Description

Embodiments of the present disclosure relate to a vehicle, an apparatus, a data carrier, a computer program, a neural network, and methods for a human-machine-interface. In particular, the concept proposed herein relates to an approach for predicting cues for a human-machine-interface to achieve an appropriate driver attentiveness for certain traffic situations.

Autonomous driving as well as different traffic situations may require different levels of driver attentiveness or driver attention.

With recent development in highly automated driving (HAD) systems, it may be desired to ensure appropriate behavior of the driver as per different automation levels and current contextual state changes, in order to ensure a safe and comfortable journey. In this field, there are a wide variety of systems and methods to record the status of an occupant and appropriateness of his/her behavior. In an exemplary approach, for example, a driver is continuously observed, and the current state of alertness is recorded. If the driver does not pay enough attention to the task of driving, then measures are taken to draw attention back to the task of driving. These observed states include external or environmental state, vehicle state and driver state.

In a further example, a simulation is used to predict the controllability of a vehicle by a driver. Thereby, a driver is modelled by reaction time based on driver capabilities (e.g., inexperienced driver). In other approaches, the focus is on modelling and adapting driving style behavior.

The "Multiple Resource Theory" is a model that defines how different modalities are perceived and processed by humans. This model is applied on the perception and cognition of a human driver. It also includes the dependencies of modalities (e.g., visual, auditory) and stages (e.g., perception or cognition) on human perception and following behavior. Most of the approaches are focused on a wide variety of input attributes and use of a large set of sensory measurements to estimate the state of the driver's behavior.

In some exemplary approaches, the notification of action or interaction with an interface is based on the future object representation with contextual information.

This is done with considering past logs of states and prediction of future state of the objects. Others apply probabilistically estimated future state of each road user and collision estimation. It generates a driver warning signal or executes an avoidance action if the risk of collision exceeds a predetermined threshold. With predicted driver behavior in, it learns the model from the difference from ideal behavior. It mainly focuses on driving efficiency and performance.

Further work on this direction includes combination of tactile and visual feedback functions, including hand position and pedal characteristics for instructing the driver.

In a driver behavior adaptation setting for partially or highly automated driving system a driver should continuously monitor the vehicle's behavior and be able to take control of the vehicle as quickly as possible in safety-critical situations. For level compliant driving the major problems are of two types: first one is warning a driver to be attentive on current state and the second one is that the system should be foresighted to estimate the on-coming situations and be ready for that (e.g., take-over request).

In a prolonged use of a semi-automated vehicle the driver's assessment of the need for monitoring or attentiveness is not always corresponding to the actual need. This can lead to safety critical and/or less comfortable driving situations as it is depending upon the subjective trust of the system.

However, existing approaches may fail to ensure that an driver is attentive enough.

Hence, there may be a demand for an improved concept for a human-machine-interface for a vehicle.

The subject-matter of the appended independent claims addresses this demand. Further embodiments are disclosed by the subject-matter of the appended dependent claims.

Embodiments of the proposed concept are based on the finding that traditional approaches may use inappropriate cues (notifications, signals, or warnings) to achieve an appropriate occupant/passenger attentiveness for certain traffic situations and/or autonomous driving levels. A basic idea of the proposed concept is, therefore, to predict appropriate cues with respect to a desired level of attentiveness for a certain traffic situation, e.g., when the automation level changes and/or if the occupant/passenger is supposed to take over control of a vehicle from an autonomous or assisted driving system. A skilled person will appreciate that the proposed approach may be not only applied for a driver of the vehicle but also for passengers who may not control the vehicle but, e.g., may also behave inadequately or inappropriately. Accordingly, in context of the present disclosure, the term occupant/passenger may not only refer to the driver but also to other passengers who do not control/drive the car. Vice versa, explanations referring to the driver may equally apply for passengers.

Embodiments of the present disclosure provide a training method for training a neural network for controlling an attentiveness of an occupant/passenger of a vehicle. The method comprises providing training data including real or synthetic information on a history of cues of a human-machine interface (HMI) on an attentiveness of the occupant/passenger in response to the cues, and on appropriate predicted cues and training the neural network, based on the training data, to determine a cue to control the occupant/passenger's attentiveness.

In this way, the neural network is able to consider personal preferences and/or peculiarities of an occupant/passenger to determine suitable or appropriate cues for a more individual or personalized interaction with the occupant/passenger. This may lead to a more appropriate level of attentiveness by the occupant/passenger, thereby leading to a higher level of safety.

Further embodiments provide a neural network obtainable by the proposed training method.

Further embodiments provide a method for an HMI for a vehicle. The method comprises obtaining an appropriate attentiveness of an occupant/passenger of the vehicle for a future traffic situation. Further, the method comprises obtaining information on a predicted future attentiveness of an occupant/passenger of the vehicle for a future traffic situation and determining a cue to be provided to the occupant/passenger to obtain the appropriate attentiveness.

In practice, the predicted future attentiveness, e.g., may be an appropriate for the future traffic situation. In this case, the occupant/passenger may be notified to achieve an appropriate (level of) attentiveness. A skilled person having benefit from the present disclosure will understand that different traffic situations may require, and different cues may achieve different levels of attentiveness. So, according to the proposed concept, e.g., the cue may be adapted or determined accordingly such that an appropriate attentiveness by the occupant/passenger is achieved.

In practice, the cue may be determined using a neural network, e.g., a neural network obtainable by the proposed training method. To this end, the neural network may be trained based on information on a history of the occupant/passenger's behavior and/or reactions to cues in order to consider preferences and/or peculiarities of different occupant/passengers. So, neural network may provide appropriate cues more reliably.

The skilled person having benefit from the present disclosure will understand that the appropriate attentiveness may depend on the future traffic situation and automation level (used for/during the future traffic situation).

So, in some embodiments, obtaining the appropriate attentiveness comprises obtaining information on a future traffic situation and information on an automation level of the vehicle for the future traffic situation and determining the appropriate attentiveness based on the information on the future traffic situation and the automation level.

For example, lower automation levels (where more occupant/passenger input is required) and/or more complex traffic situations (e.g., for denser traffic and/or higher speed levels) a higher level of attentiveness may be desired or required than for higher automation levels and less complex traffic situations.

In some embodiments, the method further comprises determining a current attentiveness of the occupant/passenger and providing the determined cue to the HMI for notifying the occupant/passenger if the attentiveness of the occupant/passenger is lower than the appropriate attentiveness. In this way, the attentiveness of the occupant/passenger may be raised to an appropriate level for the upcoming future traffic situation to make sure the occupant/passenger is able to react if he/she has to, e.g., if the automation level requires certain input from the occupant/passenger.

In some embodiments, the current attentiveness and the cue are determined iteratively. In this way, the attentiveness may be kept on an appropriate level.

In practice, determining the cue may comprise determining a cue type, a cue intensity, a duration, and/or a point in time for the cue.

In context of the present disclosure, the term "cue" is to be understood broadly. So, it may be understood as any kind of notification, signal, or warning for the occupant/passenger or passenger to get the occupant/passenger's attention. In practice, cues may be any output signals from HMI components and may serve as input for occupant/passenger.

The occupant/passenger may be notified or warned in different ways, i.e., examples of the cue may address different human senses, e.g., the sense of sight, hearing, touch or even the sense of smell.

Accordingly, determining the cue type may comprise selecting the cue type from a plurality of cue types including a tactile cue, a visual cue, and/or an audible cue.

Other than that, cues may differ in other various properties (e.g., intensity or duration) which may be set when determining the cue.

For examples, determining the cue comprises increasing the cue intensity and/or the duration, iteratively and/or adapting the cue type if the occupant/passenger's attentiveness is lower than the appropriate attentiveness in response to a preceding cue.

In this way, it may be ensured more reliably that the appropriate attentiveness is reached than, e.g., if the same cue would be used repeatedly.

Further embodiments provide a computer program comprising instructions which, when the computer program is executed by a computer, cause the computer to carry out an embodiment of any one of the proposed methods and/or provide a neural network according to the present disclosure.

Also, embodiments may provide a computer-readable data carrier having stored thereon such a computer program.

As well, embodiments may provide an apparatus comprising one or more interfaces for communication and a data processing circuit configured to execute an embodiment of any one of the proposed methods and/or provide a neural network according to the present disclosure.

The skilled person will appreciate that the proposed concept may be applied in an HMI for a vehicle. Accordingly, the apparatus may comprise or correspond to such an HMI implementing the proposed approach.

So, further embodiments may provide a vehicle comprising an embodiment of the proposed approach.

Further, embodiments are now described with reference to the attached drawings. It should be noted that the embodiments illustrated by the referenced drawings show merely optional embodiments as an example and that the scope of the present disclosure is by no means limited to the embodiments presented:

### Brief description of the drawings

Fig. 1 shows a flow chart schematically illustrating an embodiment of a method for training a neural network for an HMI;
Fig. 2 shows a flow chart schematically illustrating an embodiment of a method for an HMI for a vehicle;
Fig. 3 shows an example architecture for an implementation of the proposed approach;
Figs. 4 & 5 show flow charts schematically illustrating other embodiments of the method for an HMI for a vehicle;
Figs. 6a & 6b show use cases of the proposed approach; and
Fig. 7 shows a flow chart schematically illustrating an embodiment of an apparatus according to the present disclosure.

In the context of autonomous driving, the occupant/passenger's attentiveness is a crucial but often misunderstood aspect. While autonomous vehicles are designed to handle most driving tasks, they may be not fully infallible and still require human oversight, especially in higher levels of automation where the car rarely but still may need the occupant/passenger to intervene in complex situations this may be a challenging task for the occupant/passenger. Inappropriate attentiveness, such as excessive reliance on the vehicle's autonomous systems or distraction due to overconfidence, can lead to delayed reactions in critical moments when human intervention is necessary. This can result in dangerous situations, including accidents that could have been avoided with proper occupant/passenger engagement.

Moreover, the ambiguity surrounding the level of control required from the driver in semi-autonomous vehicles can cause confusion, leading to a false sense of safety. Drivers might mistakenly believe that the vehicle is capable of handling all situations independently, leading them to divert their attention to non-driving tasks. This inappropriate level of attentiveness undermines the intended collaborative operation between human and machine, where the driver is expected to monitor the environment and take control when needed.

The consequences of such inattention can be severe. In critical scenarios, where the autonomous system fails to recognize or appropriately respond to an unexpected hazard, a distracted driver may not react in time to prevent a collision. This not only endangers the driver and passengers but also other road users. Therefore, maintaining appropriate attentiveness is essential, as it ensures the driver can fulfill their role as a safety net for the autonomous system, intervening when necessary to prevent accidents and ensure safe operation.

However, notification by an HMI may fail to raise appropriate awareness of a driver, e.g., because the driver may be desensitized regarding certain types of notifications. For example, the driver may be flooded with text notifications in everyday life and therefore may ignore text notifications from the HMI even if they may be safety-critical. Other users may be likewise less sensitive to audible or tactile notifications, e.g., due to physical impairment.

The subject-matter of the present disclosure provides:
a. Prediction of cues at future time stamp using state history to early detect critical situations and to build up (personalized) warning cascades.
b. Estimation of probability/confidence-based cues [set of multiple cues with intensities via uncertainties] to judge on the most probable future for level compliant driving in HAD.

One focus is on the communication between vehicle and user as well as on the resulting lack of transparency of current AD systems. The present disclosure particularly provides a solution for the following drawbacks of other approaches:
- Uncertain future state level compliance with HMI (Human Machine Interaction) systems
- Missing use of multiple cue prediction for user warning
- Missing use of cue intensities i.e., probabilistic cue confidence

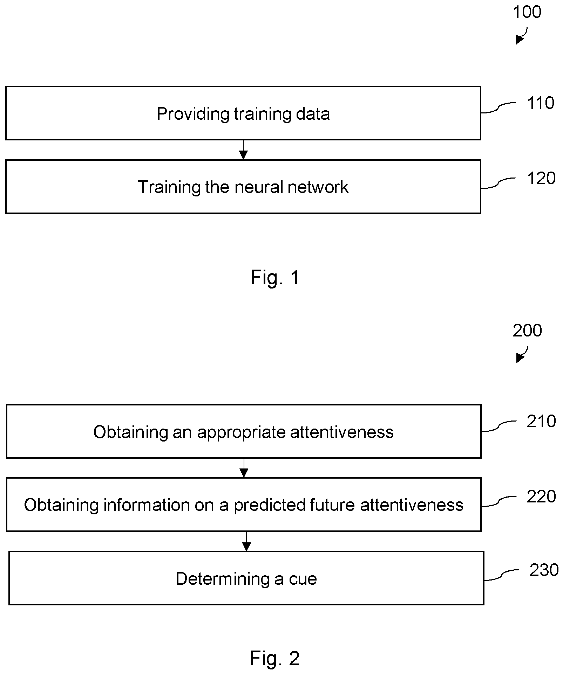

According to one idea of the present disclosure, a neural network is trained for predicting appropriate cues to achieve an appropriate attentiveness of an occupant/passenger in view of a predicted upcoming/future traffic situation, e.g., a hand over of control over the vehicle from an autonomous or semi-autonomous/advanced assisted driving system (ADAS) to the occupant/passenger. Embodiments of the neural network are based on the finding that such neural network may be trained based on a history of interaction between an HMI and the occupant/passenger, e.g., based on a log file including information on cues presented to the occupant/passenger and the occupant/passenger's attentiveness in response to the cues. Further details are explained below with reference to Fig. 1.

Fig. 1 shows a flow chart schematically illustrating an embodiment of a method 100 for training a neural network for controlling an attentiveness of a occupant/passenger of a vehicle.

In context of the present disclosure, the term "attentiveness" may refer to a measure of a focus on and/or a occupant/passenger's awareness of a surrounding traffic environment or situation, and vehicle operation. In this regard, attentiveness may describe how diligently the occupant/passenger pays attention and/or the occupant/passenger's responsiveness and/or capabilities to monitor traffic conditions, anticipate potential hazards, and respond or react appropriately to changes. The attentiveness, e.g., is lower if or when the occupant/passenger is distracted, e.g., doing things such as sleeping, reading a book or other things not related to driving the vehicle or observing the autonomous/assisted driving. In practice, the attentiveness may be the lower the less the occupant/passenger is able to intervene or react. So, e.g., the attentiveness may be considered higher if the occupant/passenger is less distracted and/or conscious. So, the attentiveness may be higher if the occupant/passenger is in discussion with another passenger than if the occupant/passenger would be asleep. The skilled person will understand that the attentiveness may be assessed by different metrics considering different indicators describing the distraction of the occupant/passenger, the occupant/passenger's consciousness, and/or the occupant/passenger's capabilities to react or respond. Accordingly, the attentiveness may be specified differently, e.g., by a value or number and/or with reference to a occupant/passenger behavior, certain capabilities, distractions, and/or a desired user role (see user roles for SAE levels below). For example, the attentiveness is "occupant/passenger monitors the traffic environment and is ready to react as quickly as on average" or "occupant/passenger meets requirements for automation level X" (X may stand for an arbitrary SAE level or any other kind of automation level).

As indicated the method 100 comprises providing 110 training data including real or synthetic information on a history of cues of an HMI, on an attentiveness of the occupant/passenger in response to the cues, and on appropriate predicted cues. For this, the history of cues, e.g., may be recorded in a log file together with information on the occupant/passenger's attentiveness in response to the cues. To this end, the occupant/passenger may be monitored, e.g., using an occupant/passenger monitoring system configured to determine the occupant/passenger's attentiveness. In practice, e.g., the occupant/passenger monitoring system may include one or more touch sensors configured to detect if the occupant/passenger touches the vehicle's steering wheel. Alternatively, or additionally, the occupant/passenger monitoring system may comprise a camera system to record the occupant/passenger and configured to determine from image data from the camera system the occupant/passenger's attention. For example, the camera-based sensor system may be configured to determine from the image data if the occupant/passenger is paying attention to the traffic or not, e.g., from the occupant/passenger's viewing direction. In this way, the neural network learns how the cues impact the occupant/passenger's attentiveness. Further, ground truth indicative of appropriate predicted cues is used to configure the neural network to predict appropriate cues to achieve a certain attentiveness.

As well, the method 100 comprises training 120 the neural network, based on the training data, to determine a cue to control the occupant/passenger's attentiveness.

The skilled person having benefit from the present disclosure will appreciate that the proposed approach may be applied for different neural networks.

In context of the present disclosure, neural networks can be understood as computational models comprising interconnected layers of nodes (so-called "neurons") that process data. They are configured to recognize patterns through training and adjusting weights based on errors. Examples of neural networks include Feedforward Neural Networks (FNN), Convolutional Neural Networks (CNN), and Recurrent Neural Networks (RNN).

Also, different machine learning techniques may be applied for the training 120.

Exemplary machine learning techniques include supervised as well as unsupervised, and reinforcement learning. Supervised learning may include methods like regression and classification, where the neural network learns from labeled data. Unsupervised learning may involve clustering and dimensionality reduction, discovering patterns in unlabeled data. Also, reinforcement learning may be applied where an agent learns to make decisions by receiving rewards or penalties. Alternatively, embodiments use semi-supervised learning, combining labeled and unlabeled data, and self-supervised learning, where a system generates labels from the data itself.

The trained neural network may be applied in an HMI for a vehicle to predict cues to achieve an appropriate occupant/passenger attentiveness for future traffic situations. It is noted that the term "vehicle/s" is to be interpreted broadly in context of the present disclosure. So, vehicles according to the present disclosure may include any kind of vehicle, including various ground vehicles (e.g., car, truck, bus, motorcycle, and/or the like), various watercrafts (e.g., boat), various aircrafts (e.g., planes, helicopters), and/or a combination thereof (e.g., amphibious vehicle).

In some embodiments, the neural network may be configured to distinguish between different occupant/passengers. For this, the training data may include and distinguish between training data for different occupant/passengers. To this end, e.g., information on a history of cues of an HMI, on an attentiveness of the occupant/passenger in response to the cues, and on appropriate predicted cues may be labelled with labels for different occupant/passengers.

Additionally, or alternatively, the training data may include information on one or more traffic situations as well as on an appropriate attentiveness for the traffic situations. In this way, the neural network is configured to assess the traffic situations and the respective attentiveness desired or required.

The trained neural network, then, e.g., may be applied in connection with embodiments of the proposed method for an HMI which is outlined in more detail with reference to further drawings, e.g., Fig. 2.

Fig. 2 shows a flow chart schematically illustrating an embodiment of a method 200 for an HMI for a vehicle.

The method 200 comprises obtaining 210 an appropriate attentiveness of a occupant/passenger of the vehicle for a future traffic situation.

In particular, but not necessarily, the traffic situation may be a specific traffic situation which needs a certain attentiveness by the occupant/passenger. In practice, this may be any traffic situation where a required input or attentiveness by the occupant/passenger changes with respect to a current attentiveness required. For example, the traffic situation corresponds to a traffic situation where the automation level changes and/or which may be too complex for autonomous driving so that input from the occupant/passenger is needed. Accordingly, the appropriate attentiveness may be obtained based on information on the future traffic situation. In practice, e.g., the appropriate attentiveness may be obtained from a user role specified for the changed automation level. For example, the appropriate attentiveness is such that the occupant/passenger at least touches the steering wheel to be able to react or the appropriate attentiveness requires the occupant/passenger to be able to maneuver the vehicle by himself or herself.

Alternatively, the future traffic situation may be not a specific traffic situation but just any traffic situation at a certain point in time in the future. In this case, the traffic situation may be assessed for the future point in time in terms of the attentiveness appropriate for the traffic situation expected for this point in time. For example, it is expected that, by then, the traffic becomes denser and, therefore, the appropriate attentiveness is higher than it is currently. The future traffic situation, e.g., may be determined from sensor data of environmental sensors and/or other (e.g., communicated) information on the traffic (e.g., traffic report, user input, nearby major events, etc.).

One idea of the proposed approach is to check whether the occupant/passenger's attentiveness will be sufficient or appropriate for the future traffic situation, e.g., if the occupant/passenger may be able to provide proper control input, intervene, and/or react fast enough.

To this end, the method 200 comprises obtaining 220 information on a predicted future attentiveness of a occupant/passenger of the vehicle for a future traffic situation.

The predicted future attentiveness, e.g., may be determined based on the occupant/passenger's behavior and/or a history of the occupant/passenger's behavior. For example, the occupant/passenger's attentiveness is not expected to change if the occupant/passenger is asleep. In contrast, the attentiveness may be expected to change if the occupant/passenger is distracted temporarily, e.g., adjusting the vehicle's air conditioning and/or other settings. Accordingly, the predicted future attentiveness may be expected to be appropriate and/or inappropriate for the future traffic situation. If the occupant/passenger is asleep, the predicted future attentiveness, e.g., may be expected to be inappropriate while it may be expected to be appropriate if the occupant/passenger is distracted temporarily and expected to become attentive enough prior to the future traffic situation.

The skilled person will appreciate that the occupant/passenger's behavior may be determined different ways. The behavior of the occupant/passenger, e.g., is determined using a occupant/passenger monitoring system which may include a camera system and/or one or more other sensors configured to record the occupant/passenger's behavior or actions.

Another idea of the proposed approach is to provide an appropriate cue considering the appropriate attentiveness for the future traffic situation.

Accordingly, method 200 comprises determining 230 a cue to be provided to the occupant/passenger to obtain the appropriate attentiveness.

In doing so, different cues may be determined or different future traffic situations requiring a different (appropriate) attentiveness. Traffic situations requiring more or faster input from the occupant/passenger, e.g., may require a higher attentiveness and traffic situations requiring less or less fast input from the occupant/passenger. Accordingly, for traffic situations requiring a higher appropriate attentiveness, a more noticeable/perceptible/discernible cue may be determined such that the occupant/passenger more likely perceives or appreciates the cue. Vice versa, for traffic situations requiring a lower appropriate attentiveness, a less noticeable/perceptible/discernible cue may be determined.

As well, the predicted future attentiveness may be considered determining 230 the cue. For example, if the predicted future attentiveness is expected to meet the appropriate attentiveness for the future traffic situation, no cue is to be provided. Accordingly, no cue may be determined.

Otherwise, if the predicted future attentiveness is expected to not meet the appropriate attentiveness for the future traffic situation, a cue is to be provided. Accordingly, the cue may be determined.

In other words, the cue may be determined based on (a comparison of) the appropriate attentiveness for the future traffic situation and the predicted future attentiveness.

In doing so, optionally, a deviation between the predicted future attentiveness and the appropriate attentiveness may be considered. For example, for a larger deviation (e.g., in terms of an attentiveness level), a more noticeable/perceptible/discernible cue may be determined and vice versa.

Alternatively, or additionally, a current attentiveness may be considered determining 230 the cue. For example, for a lower current attentiveness it is expected that the occupant/passenger notices the cue less likely. Hence, a more noticeable/perceptible/discernible cue may be determined.

The skilled person having benefit from the present disclosure will appreciate that a noticeability/perceptibility/discernability of the cue may be determined based on a cue type (e.g., cue type from a plurality of cue types including a tactile cue, a visual cue, and/or an audible cue), a cue intensity, a duration, and/or a point in time for the cue.

Optionally, the predicted future attentiveness and the cue may be determined iteratively for the same future traffic situation. In other words, the steps of obtaining 220 information on a predicted future attentiveness and determining 230 the cue may be repeated or executed iteratively for the same future traffic situation.

In this way, it may be more reliably ensured that the appropriate attentiveness is achieved by the future traffic situation. In doing so, the
noticeability/perceptibility/discernability of sequential cues may increase which may ensure that the occupant/passenger notices/acknowledges one of the sequential cues.

In some embodiments, a (appropriately trained) neural network may be used for determining the cue, e.g., using a neural network obtainable by an embodiment of the proposed training method.

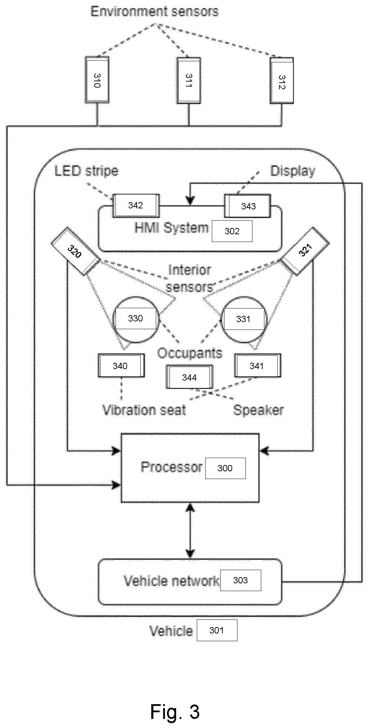

Fig. 3 shows an exemplary architecture for an implementation of the proposed approach.

The proposed method may be executed by a processor 300 and a neural network 303 for a vehicle 301. The processor 300 is communicatively coupled with one or more environmental/environment sensors 310, 311, and 312 for monitoring the traffic environment of the vehicle 301 as well as with an occupant/passenger monitoring system including interior sensors 320 and 321 for monitoring occupants 330 and 331 of the vehicle 301.

Processor 300 receives sensor data from the environmental/environment sensors 310, 311, and 312 as well as from the occupant/passenger monitoring system and provides sensor data to the vehicle network 303 which may be trained in accordance with the proposed training method.

The vehicle network 303 predicts the future traffic situation from the sensor data from the environmental/environment sensors 310, 311, and 312 and assesses the future traffic situation to obtain the appropriate attentiveness for the future traffic situation. Further, the vehicle network 303 obtains the predicted future attentiveness based on the sensor data from the occupant/passenger monitoring system. In a further step, the vehicle network 303 determines the cue (based on the appropriate and predicted future attentiveness) and provides the determined cue to an HMI, also referred to herein as "HMI system" 302 to provide the cue to the occupant/passenger 330 by the HMI system 302. For this, the HMI system 302 may be equipped with different modalities to interact with an occupant, e.g., to generate the cue. In the present example, the HMI system 302, e.g., includes an LED stripe 342 for visual light-based cues, a display 343 for text-based or sign-based cues, a speaker 344 for audible cues, and vibration seats 340 and 341 for tactile cues.

If the occupants (e.g., the occupant/passenger and/or passenger) are not level-compliant and a cue is required based on the HMI agent predictions (403), the cue will be sent to the HMI system (404). Then the loop starts again, with a desired iteration time until the system is shut down.

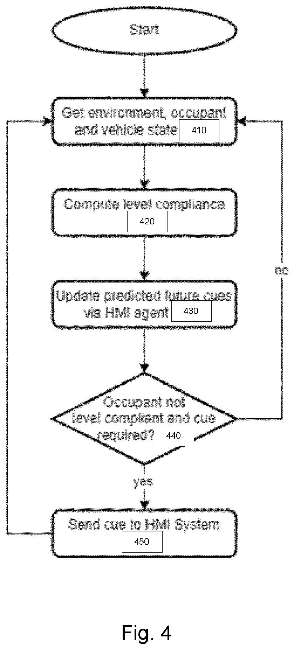

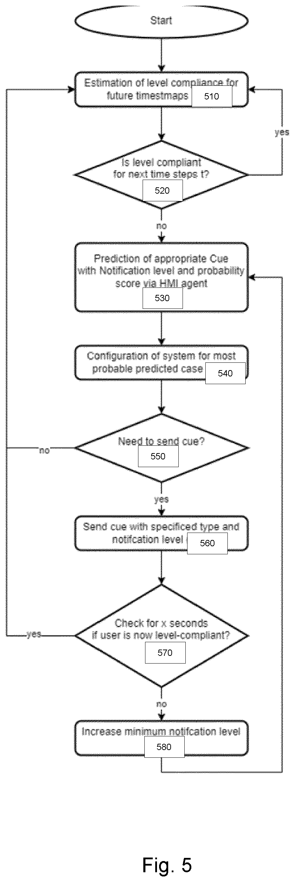

The skilled person will appreciate that the proposed approach may be implemented in different ways, e.g., that the proposed method may be executed in different steps or sequences of steps, as laid out in more detail below with reference to Figs. 4 and 5.

Fig. 4 shows a flow chart schematically illustrating an exemplary embodiment of the method for an HMI.

As mentioned above one goal may be to predict and activate cues so that the occupant/passenger turns into or stays in a level-compliant state, e.g., that an appropriate attentiveness is achieved to fulfill a certain user role predefined for an automation level (e.g., SAE level) to be assumed. As indicated, exemplary cues may include an audio sound or a notification on a display. So, e.g., for each SAE level a set of rules can be defined that determine whether an occupant/passenger is level compliant or not. This may be based on current states of the occupant/passenger and may take also into consideration legal regulations.

Accordingly, in step 410 of the present example, information on an environment, and occupant/passenger, and a vehicle state (including information on the vehicle's environment, automation level, and/or an operational state (e.g., position, velocity, driving direction, acceleration and/or the like)) is obtained.

In a subsequent step 420, level compliance is computed. That is, it is checked whether the occupant's/passenger's attentiveness complies with a user role defined for an automation level of the vehicle, e.g., the automation level which is applied or to which the vehicle changes in the future traffic situation.

Exemplary user roles may be defined as follows:

| **User role** | **Description** | **SAE Level** |
|---|---|---|
| Active Driver | Responsible, active driver, possibly supported by assistance systems. | 0-1 |
| Monitoring Driver | Responsible vehicle driver, supported by assistance systems / automation systems that take over the driving task under permanent monitoring of the driver. | 2 |
| On-call Driver | Responsible driver, supported by automation systems that take over the driving task completely, but can request the takeover by the user at any time and use it as a fallback level. | 3 |
| Temporary passenger | On defined sections of the route, the user does not participate in the vehicle guidance in any way, and the driving task is completely transferred to the automation system. This is able to cope with all situations without the user's intervention. Outside of these sections of the route, part of the driving task is transferred to the user. | 4 (Sub trip) |
| Preparing driver | The user prepares for the upcoming transition to a lower level. | 4 (Sub trip) |
| Permanent passenger | The user does not participate in any way during the entire journey, the driving task is completely taken over by the automation system. | 4 (Full trip) - 5 |

Then, in step 430, predicted future cues may be updated (to determine an appropriate cue). In doing so, predefined cues may be updated such that is (likely) achieved. In practice, e.g., a default cue may be predefined and the default cue may be adapted based on the obtained information such that level compliance is achieved more reliably than for the default cue. To this end, e.g., one or more of the aforementioned properties of the cues may be adapted. For example, the cue type, intensity, and/or duration is adapted. In doing so, different levels of noticeability/perceptibility/discernability may be achieved. Those levels may be also referred to as "notification level" of cues. Exemplary notification levels may be defined as follows:
Since there can be different criticalities regarding level compliance, also the cues that are sent to the user should allow different intensities. This will ensure that the user can realize the urgence of correcting behavior, too. Additionally, upcoming (level) changes can be announced in time and with the right intensity. Therefore, the present disclosure proposes to have multiple different notification levels per cue type. The notification levels may be defined as follows (see also table below):
- Notification level 1: Base/Normal level of first notification if the user is not compliant and should change the behavior. Also used for notification of user for an upcoming level transition.
- Notification level 2: User has not changed the behaviour after first notification for 5 seconds.
- Notification level 3: Sent, when the user needs to change behaviour or needs to take over immediately. Also send when user does not change behaviour after notification level 2 cue for 5 seconds.
- Notification level 4: Will trigger a minimal risk manoeuvre of the vehicle and will notify the user about that.

| **cue** | **Notification level 1** | **Notification Level 2** | **Notification Level 3** | **Notification Level 4** | **Comment** |
|---|---|---|---|---|---|
| Cluster display | Alert icon | Alert icon and instruction text | Pulsating alert icon and increased visibility of instruction text | Level 3 + Notification about MRM | One icon for level 1 to 3. |
| Phone | Alert icon | Alert icon and instruction text | Pulsating alert icon and increased visibility of instruction text | N/A | |
| LED stripe | Alert animation | Alert animation with change in color and brightness | Alert animation with change in color, brightness and added blinking | Extra alert animation | One base animation for level 1 to 3. |
| Vibrotactile seat | Simple bottom-up vibration pattern | Simple bottom-up vibration pattern with increased intensity | Simple bottom-up vibration pattern with increased intensity and frequency | N/A | |
| Speaker | Alert sound | Alert sound with increased volume | Alert sound with increased volume and change in intensity characteristics | Different alert sound from previous ones | One alert sound for level 1 to 3. |

Then, if the occupant/passenger is not level compliant (see box 440) the updated cues are provided to the HMI system (see step 450). Otherwise, if the occupant/passenger already is level compliant, the steps 410, 420, and 430 may be executed again/iteratively.

Further details are outlined below with reference to another example shown in Fig. 5.

As can be seen, in this example, in step 510, it is estimated whether the occupant/passenger is level compliant for one or more future timestamps (within a predefined time horizon) (respectively: future traffic situations at those timestamps). If the occupant/passenger (likely, e.g., more likely than a predefined probability threshold) is/behaves level compliant, step 510 is repeated (see box 520). Otherwise, appropriate cues with a (appropriate) notification level is determined/predicted together with a probability score indicating how likely the occupant/passenger becomes level compliant (see box 520 and step 530). To this end, a trained neural network (also referred to herein as "predictive HMI agent") obtainable by the proposed training method may be used, which is configured to predict future appropriate cues in terms of one or more of their properties.

To this end, the HMI agent gets the history of states and, e.g., initial or the last predicted future cues to predict a new/updated list of possible future cues. Thereby, the HMI agent will also get information about upcoming level-transitions or hand overs, e.g., based on a planned route.

Then, the HMI system is configured and prepared to execute cues (see step 540). In doing so, e.g., functions and/or devices for outputting the cue may be activated and/or turn on. This shall allow timely and fast execution of the cues.

Then, it is checked if a cue shall be sent at the current timestamp (see step 550). If this is not the case the process returns to (510). Otherwise, the cue is sent with the specified properties (e.g., type and notification level) (see step 560).

It is then checked, for a predefined duration (e.g. of a few (tens of) seconds, or any other appropriate duration), if the user is now level compliant (see step 570). If that is the case, then the process returns to (see step 510).

Otherwise, the (minimum) notification level is increased (see step 580), e.g., from 1 to 2, and reset once the occupant is again level-compliant. Additionally, or alternatively, the duration, is adapted (iteratively) and/or the cue type is adapted if the occupant/passenger's attentiveness is lower than the appropriate attentiveness in response to a preceding cue.

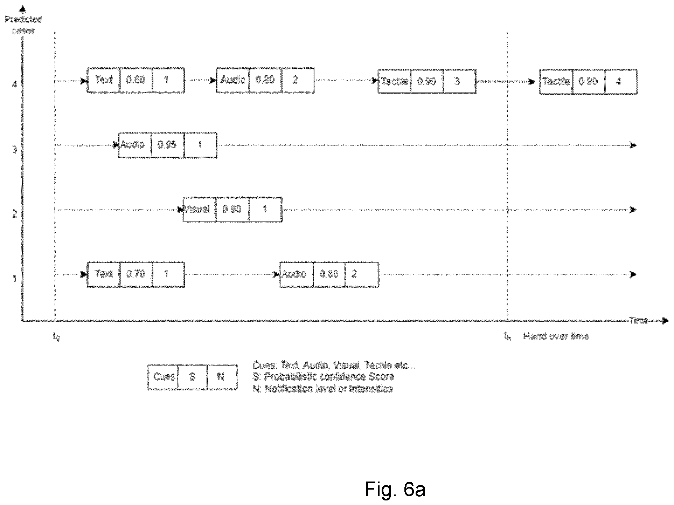

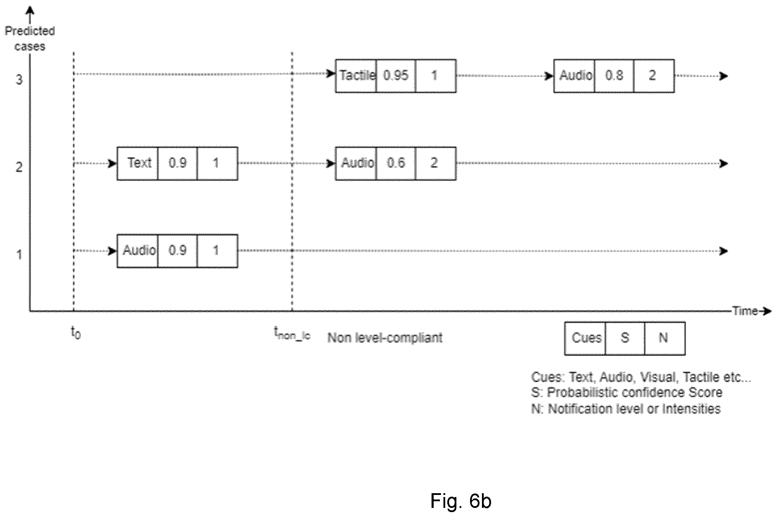

Further details are outlined below with reference to exemplary use cases, as shown in Figs. 6a and 6b.

One use case, where such an HMI agent can be used, is a hand over request. Consider the case where the vehicle can automatically drive on the highway, but at the exit the driver needs to take over.

Figure 6a shows an example visualization how a prediction of the HMI agent could look like.

As laid out in more detail below with reference to examples in Fig. 6a and 6b, embodiments of the proposed approach include determining one or more sequences including one or more cues, also referred to as "Q sequences".

In the example of Fig. 6a, a current timestamp is *t*₀ and the HMI agent may predict now multiple, in this case, four different possible future scenarios 1 to 4. The number of possible future scenarios can be either configured or also selected based on probabilities of predictions. In each future scenario, there are predicted cues with a certain cue type, and a certain probability of occurrence (based on a probability of the future scenario) and a notification level of that cue. For example, taking future 2, it is expected that after sending a visual cue the driver will be aware and level-compliant to take over the vehicle before *tₕ* (where the hand over takes place), while future 4 assumes that the driver will not take over (e.g., not level-compliant) and, thus, a minimal risk maneuver is initiated.

Another use case could be the simple case that an occupant will be non-level-compliant at a certain point in time *t_{non_lc}* (see Fig. 6b). Again, there are multiple possible future scenarios 1 to 3 and respective predicted cue sequences. Note that the HMI agent can choose proactive strategies (e.g., future scenario 1 and 2) or reactive strategies (3). For proactive strategies, one or more cues may be determined for the case that the occupant/passenger is not level compliant at a predefined point in time (e.g., a predefined time stamp).

To this end, the HMI agent/neural network may be trained using reinforcement learning with synthetically generated data (see aforementioned training data) using a simulation that emulated human behavior. This allows to generate random scenarios with different possible future scenarios to let the HMI agent learn different possibilities. The model of the reinforcement learning might be configured as a PPO (Proximal Policy Optimization) model but is not limited to. After the training of the HMI agent is finished in simulation, the agent's model is updated using supervised learning with annotated real data (see aforementioned training data) to reduce the domain gap between the simulation and the real environment. This trained model is modelled in such a way that it can predict futures cues during inference stage. Lastly, the agent can continuously learn for specific users to adapt its behavior in order to optimize a time that a user stays level-compliant and thus, have a safe and comfortable drive.

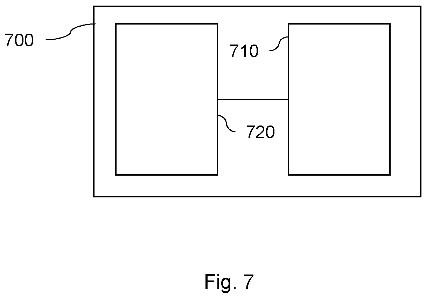

As the skilled person will appreciate, the proposed approach may be implemented in an apparatus, e.g., an apparatus including or corresponding to an HMI (system) for a vehicle, as laid out in more detail below with reference to Fig. 7.

Fig. 7 shows a block diagram schematically illustrating an embodiment of such an apparatus 700. The apparatus comprises one or more interfaces 710 for communication and a data processing circuit 720 configured to execute the proposed method.

In embodiments, the one or more interfaces 710 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 720 may correspond to or comprise any type of programable hardware. So, examples of the data processing circuit 720, e.g., comprise a memory, microcontroller, field programable gate arrays, one or more central, and/or graphical processing units. To execute the proposed method, the data processing circuit 720 may be configured to access or retrieve an appropriate computer program for the execution of the proposed method from a memory of the data processing circuit 720 or a separate memory which is communicatively coupled to the data processing circuit 720.

In practice, the proposed apparatus may be installed on a vehicle. So, embodiments may also provide a vehicle comprising the proposed apparatus. In implementations, the apparatus, e.g., is part or a component of an HMI system.

However, in implementations, computing resources for the vehicle may be outsourced to an external server separate from the vehicle. In such implementations, the proposed approach may be also implemented outside of the vehicle.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

## Claims

1. A training method (100) for training a neural network for controlling an attentiveness of an occupant/passenger of a vehicle, the method comprising:
providing (110) training data including real or synthetic information on a history of cues of a human-machine interface, HMI, on an attentiveness of the occupant/passenger in response to the cues, and on appropriate predicted cues; and
training (120) the neural network, based on the training data, to determine a cue to control the occupant/passenger's attentiveness.

2. A method (200) for an HMI for a vehicle, the method (200) comprising:
obtaining (210) an appropriate attentiveness of an occupant/passenger of the vehicle for a future traffic situation;
obtaining (220) information on a predicted future attentiveness of a occupant/passenger of the vehicle for a future traffic situation; and
determining (230) a cue to be provided to the occupant/passenger to obtain the appropriate attentiveness.

3. The method (200) of claim 2, wherein the cue is determined using a neural network obtainable by the training method (200) of claim 1.

4. The method (200) of claim 2 or 3, wherein obtaining the appropriate attentiveness comprises:
obtaining information on a future traffic situation and information on an automation level of the vehicle for the future traffic situation; and determining the appropriate attentiveness based on the information on the future traffic situation and the automation level.

5. The method (200) of any one of the claims 2 to 4, wherein the method (200) further comprises determining a current attentiveness of the occupant/passenger and providing the determined cue to the HMI for notifying the occupant/passenger if the attentiveness of the occupant/passenger is lower than the appropriate attentiveness.

6. The method (200) of claim 5, wherein the current attentiveness and the cue are configured iteratively.

7. The method (200) of any one of the claims 2 to 6, wherein determining the cue comprises determining a cue type, a cue intensity, a duration, and/or a point in time for the cue.

8. The method (200) of claim 7, wherein determining the cue type comprises selecting the cue type from a plurality of cue types including a tactile cue, a visual cue, and/or an audible cue.

9. The method (200) of claims 6, and claim 7 or 8, wherein determining the cue comprises increasing the cue intensity and/or the duration, iteratively and/or adapting the cue type if the occupant/passenger's attentiveness is lower than the appropriate attentiveness in response to a preceding cue.

10. A neural network obtainable by a method according to claim 1.

11. A computer program comprising instructions which, when the computer program is executed by a computer, cause the computer to carry out a method of any one of the claims 1 to 9 and/or provide a neural network according to claim 10.

12. A computer-readable data carrier having stored thereon the computer program of claim 11.

13. An apparatus (700) comprising:
one or more interfaces (710) for communication; and
a data processing circuit (720) configured to execute a method (100, 200) of any one of the claims 1 to 9 and/or provide a neural network according to claim 10.

14. A vehicle comprising the apparatus (700) of claim 13.
